Europäisches Patentamt

European Patent Office

Office européen des brevets

(11) Veröffentlichungsnummer: **0 005 499**
**B1**

(12) **EUROPÄISCHE PATENTSCHRIFT**

(21) Anmeldenummer: **79101392.3**

(22) Anmeldetag: **08.05.79**

(51) Int. Cl.³: **E 06 B 7/28, F 24 J 3/02**

(54) Fenster mit Sonnenkollektor.

(30) Priorität: **13.05.78 DE 2821165**

(43) Veröffentlichungstag der Anmeldung:
**28.11.79 Patentblatt 79/24**

(45) Bekanntmachung des Hinweises auf die Patenterteilung:
**11.02.81 Patentblatt 81/6**

(84) Benannte Vertragsstaaten:
**AT BE CH FR GB IT LU NL SE**

(56) Entgegenhaltungen:
**DE - A - 2 522 160**
**DE - A - 2 613 220**
**FR - A - 2 353 811**
**US - A - 3 815 574**

(73) Patentinhaber: **Schako-Metallwarenfabrik**
**Ferdinand Schad GmbH**
**Zweigniederlassung Kolbingen**
**D-7201 Kolbingen (DE)**

(72) Erfinder: **Müller, Gottfried**
**Haldenstrasse 12**
**D-7201 Kolbingen (DE)**
(72) Erfinder: **Hipp, Paul**
**Hauptstrasse**
**D-7201 Kolbingen (DE)**

(74) Vertreter: **Westphal, Klaus et al,**
**Patentanwälte Dipl.-Ing. Klaus Westphal**
**Dr.rer.nat. Bernd Mussgnug Dr.rer.nat. Otto**
**Buchner Seb.-Kneipp-Str. 14**
**D-7730 Villingen (DE)**

Courier Press, Leamington Spa, England.

Fenster mit Sonnenkollektor

Die Erfindung betrifft ein mit einem Sonnenkollektor ausgestattetes Fenster, bestehend aus einem Fensterrahmen und wenigstens einem darin eingesetzten öffenbaren oder feststehenden gerahmten Flügel.

Zur Energiegewinnung insbesondere für Heizung und Warmwasserversorgung werden in jüngster Zeit in zunehmendem Umfange Sonnenkollektoren verwendet. Solche Sonnenkollektoren sind in verschiedensten Ausführungen bekannt. Im allgemeinen werden diese Sonnenkollektoren in die Dachflächen von Gebäuden eingebaut, jedoch lassen baulichkonstruktive Gründe den Einbau von Dachkollektoren nicht überall zu und es stehen häufig auch städtebauliche oder architektonische Erwägungen der Verwendung von Dachkollektoren entgegen.

Ausserdem ist es bekannt, Sonnenkollektoren an Südseiten von Gebäuden, also an vertikalen Wänden anzubringen. Solche Sonnenkollektoren eignen sich aus ästhetischen Gründen nur für gewerbliche und industrielle Anwendungszwecke.

Aus der FR - A - 2 353 811 ist ein mit einem Sonnenkollektor ausgestattetes Fenster bekannt, bei welchem der Sonnenkollektor in die Fläche des Klappfensterladens eingesetzt ist. Ein solcher Sonnenkollektor kann nur bei mit Klappfensterläden ausgestatteten Fenstern verwendet werden, nicht dagegen bei Fenstern, die keine Fensterläden oder Rolläden aufweisen. Da der Sonnenkollektor mit dem Klappfensterladen schwenkbar ist, muß außerdem eine biegsame oder gelenkige Anschlußverbindung für Zu- und Ableitung des Wärmeträgermediums vorgesehen sein.

Aus der DE - A - 2 613 220 ist ein Sonnenkollektor bekannt, der in die Fensterfläche eingesetzt ist und diese vollständig überdeckt. Der Sonnenkollektor weist schräg gestellte Lamellen auf, so daß das Sonnenlicht unter einem bestimmten Einfallwinkel zwischen diesen Lamellen durchtreten kann, während es bei anderen Einfallwinkeln von den Sonnenkollektor lamellen abgefangen wird. Dieser Sonnenkollektor deckt einen erheblichen Teil der Fensterfläche ab, so daß er für Wohn- und Aufenthaltsräume ungeeignet ist.

Der Erfindung liegt die Aufgabe zugrunde, ein Fenster der eingangs genannten Art so auszubilden, daß eine Wärmegewinnung aus Sonneneinstrahlung auf verhältnismäßig einfache Weise erfolgen kann, ohne das architektonische Bild des Gebäudes zu beeinträchtigen. Diese Aufgabe wird mit einem Fenster der eingangs genannten Art erfindungsgemäss dadurch gelöst, dass der Fensterrahmen und gegebenenfalls der Rahmen des bzw. jedes feststehenden Flügels als Sonnenkollektor ausgebildet ist.

Vorteilhafte Ausführungsformen und Weiterbildungen der Erfindung sind in den Unteransprüchen angegeben.

Erfindungsgemäss werden die bei jedem Gebäude und insbesondere bei Wohn- oder Bürohäusern in grosser Zahl vorhandenen Fensterrahmen als Sonnenkollektorflächen ausgenutzt. Falls die Fenster ganz oder teilweise mit feststehenden Flügeln ausgebildet sind, können auch die Rahmen dieser Fensterflügel als Kollektorflächen ausgenützt werden. Auf diese Weise kann über das gesamte Gebäude summiert eine sehr grosse Kollektorfläche erhalten werden.

Im Gegensatz zu den herkömmlichen Dachkollektoren sind die erfindungsgemässen Sonnenkollektoren von der Architektur des Gebäudes unabhängig und verändern dessen Aussehen praktisch nicht. Die Kollektoren stören daher weder das Erscheinungsbild des mit ihnen ausgestatteten Gebäudes noch das städtebauliche Gesamtbild der Umgebung dieses Gebäudes.

Erfindungsgemäss sind die Sonnenkollektoren vorzugsweise als flache rechteckige U-Profile ausgebildet, in denen die das Wärmeträgermedium führenden Leitungen verlaufen. Die offene Profilseite ist mit einer für die Wärmestrahlung der Sonne durchlässigen Abdeckung versehen.

Diese Formgebung der Kollektoren ermöglicht es, die Kollektoren selbst als Fensterrahmen und als Rahmen für die feststehenden Fensterflügel zu verwenden. Zu diesem Zwecke kann das gleichzeitig den Fensterrahmen und das Kollektorgehäuse bildende U-Profil aus Metall, vorzugsweise Aluminium, aus Holz oder aus Holz mit Aluminium bestehen, je nach der architektonischen Gestaltung der Fenster. Die Ausbildung der Fensterrahmen als Sonnenkollektoren beeinflusst dabei die Abmessungen des Fensters und insbesondere die Einbautiefe des Rahmens nicht.

Es ist ebenso auch möglich, die Sonnenkollektoren mit einem flachen rechteckigen U-Profil und darin verlaufenden Leitungen and der Aussenseite herkömmlicher Fensterrahmen bzw. Flügelrahmen anzubringen. Diese Ausführungsform hat zwar den Nachteil, dass sich dadurch die Einbautiefe der Fenster etwas vergrössert. Die Sonnenkollektoren gemäss dieser Ausführungsform können andererseits aber auch nachträglich auf bereits vorhandenen Fensterrahmen angebracht werden. Da die Sonnenkollektoren bei dieser Ausführungsform auch keine tragende Funktion bei der Fensterkonstruktion übernehmen, sind die Anforderungen und die mechanische Festigkeit des Kollektorgehäuses wesentlich geringer, so dass die Kollektoren in der herstellung erheblich billiger ausgeführt werden können. Insbesondere kann auch ein witterungsbeständiger Kunststoff für das U-Profil des Kollektorgehäuses verwendet werden.

Weitere Vorteile der erfindungsgemässen Sonnenkollektoren gegenüber herkömmlichen Kollektoren ergeben sich daraus, dass die Kollektoren über die gesamte Hausfassade verteilt sind. Die Kollektoren können daher beispielsweise etagenweise getrennt die Warmwasserversorgung oder eine Warmwasseretagenheizung speisen. Dadurch ist eine getrennte Versorgung der einzelnen Wohnungen eines Mehrparteienhauses möglich. Ausserdem ist dies für die nachträgliche Installation der Sonnenkollektorenflächen von Vorteil, da keine aufwendigen Deckendurchbrüche erforderlich sind, wie dies bei der nachträglichen Installation von Dachkollektoren der Fall ist.

Die in dem U-Profil der Kollektoren verlaufenden Leitungen können unterschiedlich gestaltet sein. Die Leitungen können entlang des Profils verlaufende Rohre oder Schläuche sein, das Profil kann durch Trennwände in einzelne Kanäle unterteilt sein und insbesondere können Trennwände quer zur Profillängsrichtung angeordnet sein, so dass das Wärmeträgermedium mäanderförmig durch das Profil strömt. Welche dieser Möglichkeiten gewählt wird, richtet sich im wesentlichen nach den zulässigen Herstellungskosten, nach dem erwünschten Durchsatz an Wärmeträgermedium, nach der erforderlichen Durchströmungsdauer, nach der durchschnittlichen Sonneneinstrahlung usw.

Im übrigen können die erfindungsgemässen Sonnenkollektoren in gleicher Weise für die Energiegewinnung verwendet werden, wie dies für herkömmliche Kollektoren bekannt ist. Die Kollektoren können beispielsweise mit Wasser als Wärmeträgermedium betrieben werden, wobei dieses Wasser unmittelbar als Brauchwasser einem Vorratsbehälter oder als Heizwasser einer Warmwasserleitung zugeführt werden kann. Je nach der geografischen Lage werden im allgemeinen die Sonnenkollektoren zusätzlich zu einer herkömmlichen Kohle-, Öl- oder Gasheizung verwendet, wobei ein thermostatgesteuertes Umschalten zwischen der herkömmlichen Heizung und der Sonnenkollektorheizung möglich ist.

Im folgenden wird die Erfindung anhand eines Ausführungsbeispieles unter Bezugnahme auf die beigefügte Zeichnung näher erläutert. Es zeigen:

Fig. 1 die Aussenansicht eines Fensters gemäss der Erfindung und

Fig. 2 einen Schnitt durch das Fenster der Fig. 1 längs der Linie A—B.

In dem dargestellten Ausführungsbeispiel handelt es sich um einen Sonnenkollektor, der an der Aussenseite eines herkömmlichen Fensterrahmens angebracht ist.

In die Fensteröffnung der Hauswand 10 ist in herkömmlicher Weise mittels eines Fensteranschlages bzw. des Putzes 12 ein Fensterrahmen 14 eingesetzt. Es kann sich dabei um einen herkömmlichen Rahmen aus Holz, Leichtmetall oder dergl. handeln. In den Fensterrahmen 14 sind Fensterflügel eingesetzt, die in dem dargestellten Beispiel als Verbundflügel mit einem inneren Rahmen 16 und einem äusseren Rahmen 18 ausgebildet sind.

Auf der freiliegenden Aussenfläche des Fensterrahmens 14 ist ein Sonnenkollektor 20 angebracht.

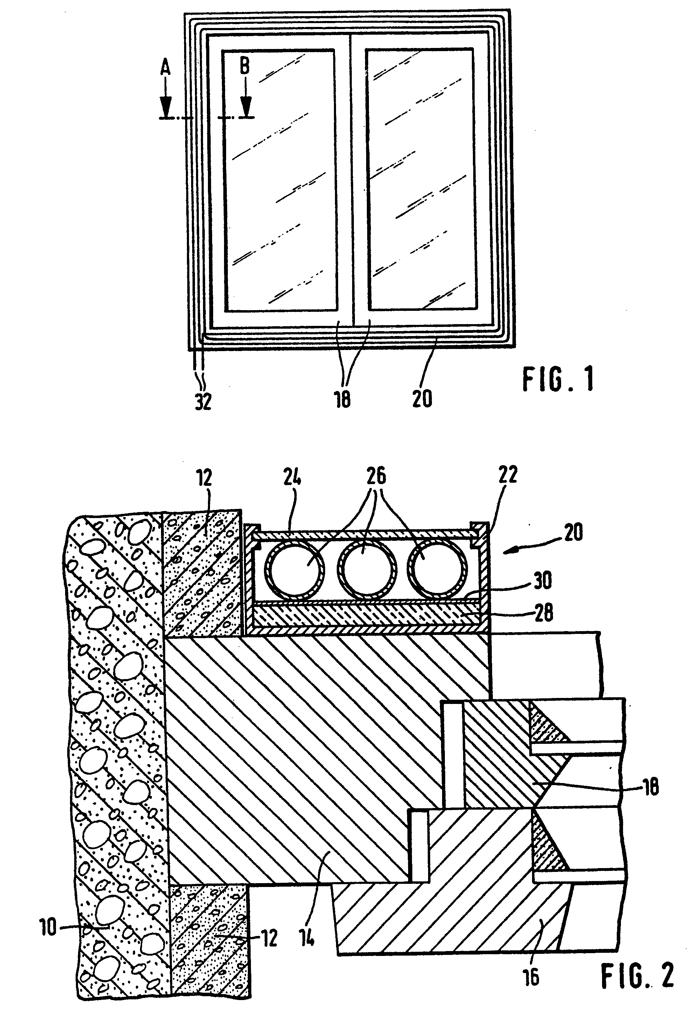

Der Sonnenkollektor 20 besteht aus einem Gehäuse, das aus einem flachen, rechteckigen U-Profil 22 besteht. Die Breite des U-Profils 22 entspricht der Breite der freiliegenden Fläche des Fensterrahmens 14, um eine optimale Flächenausnützung für den Sonnenkollektor 20 zu erhalten. Wie aus Fig. 1 ersichtlich ist, erstreckt sich der Sonnenkollektor 20 ringsum über den gesamten Fensterrahmen 14.

Die Wahl des Materials für das U-Profil 22 wird nach verschiedenen Gesichtspunkten getroffen. Solche Gesichtspunkte sind die Witterungsbeständigkeit, die Anpassung an die Architektur des Gebäudes, die Materialkosten usw. Dementsprechend kann Holz, Leichtmetall, Kunststoff oder dergl. gewählt werden.

Die nach aussen weisende offene Seite des U-Profils 22 ist durch eine Abdeckung 24 verschlossen. Für das Material der Abdeckung 24 sind ebenfalls veschiedene Gesichtspunkte massgebend. Diese Material muss insbesondere für die Wärmestrahlung der Sonne durchlässig sein und soll sich ausserdem der Architektur des Hauses anpassen. Vorzugsweise besteht die Abdeckung 24 aus Glas, das gegebenenfalls geeignet getönt sein kann.

In dem aus dem U-Profil 22 und der Abdeckung 24 gebildeten Kollektorgehäuse sind Schlauch- oder Rohrleitungen 26 angeordnet, die in Längsrichtung des U-Profils 22 parallel zueinander verlaufen. Wie in Fig. 1 schematisch angedeutet ist, sind Zu- und Abführungen 32 vorgesehen, über welche das als Wärmeträgermedium vorzugsweise verwendete Wasser den Leitungen 26 zugeführt wird bzw. über die das vorzugsweise als Wärmeträgermedium verwendete Wasser, nachdem es die nebeneinander verlaufenden Leitungen 26 nacheinander oder parallel durchströmt hat, zu dem Brauchwasserbehälter oder dem Heizungskessel abgeführt wird.

Das U-Profil 22 ist mit einer wärmeisolierenden Auskleidung 28 versehen, die gemäss Fig. 2 nur an der breiten Bodenseite vorgesehen ist. Die Anordnung einer solchen isolierenden Schicht an den Seitenwänden würde die zur Verfügung stehende Kollektorfläche verkleinern, während sie wegen der relativ geringen Höhe des U-Profils 22 für die Wärmeisolation keinen wesentlichen Vorteil bringen würde.

Weiter ist das U-Profil 22 und insbesondere die mit der Isolationsschicht oder isolierenden Auskleidung 28 bedeckte Bodenfläche mit einer strahlungsreflektierenden Auskleidung 30 versehen, die z.B. aus einer reflektierenden Folie bestehen kann.

Falls einer oder mehrere der Fensterflügel feststehend ausgebildet sind, kann auch auf der freiliegenden Aussenfläche des äusseren Flügelrahmens 18 ein entsprechender Sonnenkollektor 20 angebracht werden, wodurch die zur Verfügung stehende Kollektorfläche weiter vergrössert wird.

## Patentansprüche

1. Mit einem Sonnenkollektor ausgestattetes Fenster, bestehend aus einem Fensterrahmen und wenigstens einem darin eingesetzten öffenbaren oder feststehenden gerahmten Flügel, dadurch gekennzeichnet, daß der Fensterrahmen und gegebenenfalls der Rahmen des bzw. jedes feststehenden Flügels als Sonnenkollektor ausgebildet ist.

2. Fenster nach Anspruch 1, dadurch gekennzeichnet, daß jeder Schenkel jedes als Sonnenkollektor ausgebildeten Rahmens aus einem flachen, rechteckigen, nach der Fensteraussenseite offenen U-Profil besteht, das an der offenen Aussenseite eine für Wärmestrahlung durchlässige Abdeckung aufweist und in welchem ein Wärmeträgermedium führende Leitungen verlaufen.

3. Fenster nach Anspruch 1, dadurch gekennzeichnet, daß der bzw. jeder als Sonnenkollektor ausgebildete Rahmen ein herkömmlicher Rahmen (14, 18) ist, auf dessen Aussenfläche ein flaches, rechteckiges, nach der Fensteraussenseite offenes U-Profil (22) angebracht ist, das an der offenen Aussenseite eine für Wärmestrahlung durchlässige Abdeckung (24) aufweist und in welchem ein Wärmeträger-, medium führende Leitungen (26) verlaufen.

4. Fenster nach einem der Ansprüche 2 oder 3, dadurch gekennzeichnet, dass das U-Profil (22) aus Holz, Metall, Kunststoff oder Holz mit Metall besteht.

5. Fenster nach einem der Ansprüche 2 bis 4, dadurch gekennzeichnet, dass die Abdeckung (24) eine Verglasung ist.

6. Fenster nach einem der Ansprüche 2 bis 5, dadurch gekennzeichnet, dass die Leitungen (26) in Längsrichtung des U-Profils (22) verlaufende Kanäle sind.

7. Fenster nach Anspruch 6, dadurch gekennzeichnet, dass die Kanäle durch Rohre oder Schläuche gebildet sind.

8. Fenster nach einem der Ansprüche 2 bis 5, dadurch gekennzeichnet, dass die Leitungen mäanderförmig in dem U-Profil (22) verlaufende Kanäle sind.

9. Fenster nach einem der Ansprüche 2 bis 8, dadurch gekennzeichnet, dass das U-Profil (22) eine wärmeisolierende Auskleidung (28) aufweist.

10. Fenster nach einem der Ansprüche 2 bis 9, dadurch gekennzeichnet, dass das U-Profil (22) eine strahlungsreflektierende Auskleidung (30) aufweist.

## Claims

1. Window equipped with a sun collector, consisting of a window frame and at least one openable or fixed framed casement monted therein, characterised in that the window frame and optionally the frame of the fixed or each fixed casement is formed as a sun collector.

2. Window according to Claim 1, characterised in that each side arm of each frame formed as a sun collector has a flat, rectangular U-Profile open to the outside of the window, which profile has on the open outside a covering permeable to thermal radiation and in which run conduits carrying a heat-transfer medium.

3. Window according to Claim 1, characterised in that the or each frame formed as a sun collector is a conventional frame (14, 18) on the outside of which is mounted a flat, rectangular U-Profile (22) open to the outside of the window, which profile has on the open outside a covering (24) permeable to thermal radiation and in which run conduits (26) carrying a heat-transfer medium.

4. Window according to one of Claims 2 or 3, characterised in that the U-Profile consists of wood, metal, plastics or wood with metal.

5. Window according to one of Claims 2 to 4, characterised in that the covering (24) is a glass unit.

6. Window according to one of Claims 2 to 5, characterised in that the conduits (26) are channels running in the longitudinal direction of the U-Profile (22).

7. Window according to Claim 6, characterised in that the channels are formed by pipes or flexible tubing.

8. Window according to one of Claims 2 to 5, characterised in that the conduits are channels that run in a meandering manner in the U-Profile (22).

9. Window according to one of Claims 2 to 8, characterised in that the U-Profile (22) has a thermally insulating lining (28).

10. Window according to one of Claims 2 to 9, characterised in that the U-Profile (22) has a radiation-reflecting lining (30).

## Revendications

1. Fenêtre équipée d'un capteur solaire et constituée par un cadre ou dormant dans lequel est mis en place au moins un battant à châssis fixe ou susceptible de s'ouvrir, caractérisée en ce que le dormant, et éventuellement le châssis du ou de chaque battant fixe, est réalisé en tant que capteur solaire.

2. Fenêtre selon la revendication 1, caractérisée en ce que chaque branche de chaque dormant ou châssis conformé en tant que capteur solaire est constitué par un profilé en U rectangulaire, peut profond et ouvert vers l'extérieur de la fenêtre, le profilé en U étant équipé du côté extérieur ouvert d'un élément de recouvrement perméable au rayonnement thermique, des conduits pour la circulation d'un fluide caloporteur étant prévus à l'intérieur du profilé en U.

3. Fenêtre selon la revendication 1, caractérisée en ce que le ou chaque dormant ou châssis conformé en tant que capteur solaire est un dormant ou châssis (14, 18) connu, sur la sur la surface extérieure duquel est monté un profilé en U (22) rectangulaire, peu profond et ouvert vers l'extérieur de la fenêtre, le profilé en U étant équipé du côté extérieur ouvert d'un élément de recouvrement (24) perméable au rayonnement thermique solaire, des conduits (26) pour la circulation d'un fluide caloporteur étant prévus à l'intérieur du profilé en U.

4. Fenêtre selon la revendication 2 ou 3, caractérisée en ce que le profilé en U (22) est en bois, métal, matière synthétique ou en bois combiné avec du métal.

5. Fenêtre selon l'une quelconque des revendications 2 à 4, caractérisée en ce que l'élément de recouvrement (24) est un vitrage.

6. Fenêtre selon l'une quelconque des revendications 2 à 5, caractérisée en ce que les conduits (26) sont des canaux s'étendant dans la direction longitudinale du profilé en U (22).

7. Fenêtre selon la revendication 6, caractérisée en ce que les canaux sont formés de tubes ou de tuyaux.

8. Fenêtre selon l'une quelconque des revendications 2 à 5, caractérisée ne ce que les conduits sont des canaux en méandres à l'intérieur du profilé en U (22).

9. Fenêtre selon l'une quelconque des revendications 2 à 8, caractérisée en ce que le profilé en U (22) présente un revêtement thermiquement isolant (28).

10. Fenêtre selon l'une quelconque des revendications 2 à 9, caractérisée en ce que le profilé en U (22) présente un revêtement (30) réflecteur de rayonnement.

FIG . 1

FIG . 2